Europäisches Patentamt

**European Patent Office**

**Office européen des brevets**

(19)

(11) Publication number: **0 173 020**
**A2**

(12) # EUROPEAN PATENT APPLICATION

(21) Application number: **85107848.5**

(22) Date of filing: **25.06.85**

(51) Int. Cl.⁴: **F 16 F 9/40, B 62 K 25/08**

(30) Priority: **28.06.84 US 625504**

(43) Date of publication of application: **05.03.86**
**Bulletin 86/10**

(84) Designated Contracting States: **DE FR GB IT NL SE**

(71) Applicant: **Simons, Stephen W., 2570 Leghorn, Mountain View California 94043 (US)**

(72) Inventor: **Simons, Stephen W., 2570 Leghorn, Mountain View California 94043 (US)**

(74) Representative: **Puschmann, Heinz H. et al, Sendlinger-Tor-Platz 11, D-8000 München 2 (DE)**

(54) **Motorcycle front fork anti-cavity damping system.**

(57) Method and apparatus for providing damping in motorcycle front fork assemblies and comprising an upper fork tube telescopically engaging a lower fork leg which together contain a substantially incompressible fluid and with a hollow damping rod connected at one end thereof to the lower end of the fork leg and having a piston at the other end of the damper rod slidably engaging the fork tube and wherein a floating piston means is positioned within the upper fork tube above the damper rod piston for floating on the fluid within the front fork assembly, whereby air is prevented from being drawn down into the damper rod thereby avoiding air entrapment and lack of compression damping, inconsistent damping, and internal air-pressure build-up inside the front fork assembly.

# Description

## Motorcycle Front Fork Anti-Cavity Damping System

### Technical Field

The present invention relates generally to telescopic front fork damping systems for motorcycles and more particularly to a method and apparatus to prevent air entrapment and cavitation in damping systems.

### Background Art

Most motorcycle front fork assemblies in production today use the same damping principles. These systems typically suffer from inconsistent damping from one bump to the next and over extended periods of time.

### Summary of the Invention

The object of the present invention is to provide a novel method and apparatus which overcomes the problem of air entrapment, cavitation, and air pressure build-up and enables better independent control of damping during compression and extension of the fork assembly.

Broadly stated, the present invention, to be described in greater detail below, is directed to method and apparatus for providing damping in motorcycle front fork assemblies and comprising an upper fork tube telescopically engaging a lower fork leg which together contain a substantially incompressible fluid and with a hollow damping rod connected at one end thereof to the lower end of the fork leg and having a piston at the other end of the damper rod slidably engaging the fork tube and wherein a floating piston means is positioned within the upper fork tube above the damper rod piston for floating on the fluid within the front fork assembly.

In accordance with this aspect of the present invention air is prevented from being drawn down into the damper rod thereby avoiding air entrapment and lack of compression damping, inconsistent damping, and internal air-pressure build-up inside the front fork assembly.

In accordance with another aspect of the present invention the floating piston method and apparatus comprise a float tube positioned in the fork tube above the damper rod piston and a floating piston means positioned within that float tube to float on the fluid within the float tube and with a fluid regulation valve through the float tube permitting inflow of fluid into the float tube on demand.

In accordance with still another aspect of the present invention wherein a compression chamber is defined between the lower end of the fork tube, the inside wall of the lower portion of the fork leg and the outside wall of the damper rod, a valving method and means provides communication between the interior of the hollow damper rod and the compression chamber.

In accordance with an aspect of the present invention incorporating the features of the last aforementioned aspect of this invention, a slide member is provided inside the damper rod for closing off communication between the compressing chamber and the inside of the damper rod.

In accordance with still another aspect of the present invention a damper rod, means for providing a float on the fluid in the fork assembly and valve means for providing communication between the interior of the damper rod and a compression chamber in the bottom of the fork lega are assembled as a kit for replacement of the damper rod of front fork assemblies manufactured without the features of the present invention.

A feature and advantage of the last aforementioned aspect of the present invention is the provision for easy replacement of the damper rod of prior art front fork assemblies to incorporate the advantages of applicant's invention.

In accordance with still another aspect of the present invention a method and a fork cap apparatus are provided such that the interior of the fork assembly is open to atmosphere at full extension of the fork assembly, thereby preventing pressure build-up within the front fork assembly.

These and other aspects, features and advantages of the present invention will become more apparent upon a perusal of the following description taken in conjunction with the accompanying drawings.

Brief Description of the Drawings

Fig. 1 is a perspective view illustrating front forks on a motorcycle.

Figs. 2A and 2B are front elevational views of a motorcycle, respectively showing the front fork assembly in compression and in extension.

Figs. 3A and 3B are elevational, sectional views of a typical prior art front fork member illustrating the flow of fluid, respectively under compression and under extension of the fork member.

Figs. 4A and 4B are schematic, elevational, sectional views similar to Figs. 3A and 3B but with additional parts in section and illustrating operations believed to exist in prior art front fork members.

Fig. 5 is an elevational, sectional view of a motorcycle front fork member incorporating features of the present invention.

Fig. 6 is an elevational, sectional view of an alternative embodiment of the present invention.

Fig. 7 is an enlarged elevational, sectional view illustrating one embodiment of the base valve of the front fork assembly illustrated in Fig. 6.

Fig. 8 is an enlarged, partially exploded, elevational, sectional view illustrating the top of a front fork member incorporating features of the present invention.

Fig. 9 is a foreshortened sectional view, partially in perspective, illustrating features of the front fork member of the type illustrated in Figs. 6-8 for describing the parts that would be sold as a replacement kit for the damping system of motorcycle fork assemblies.

Fig. 10 is an elevational, sectional view of a portion of the elements of a front fork member illustrating an alternative base valve assembly to that illustrated in Fig. 7.

Description of the Prior Art

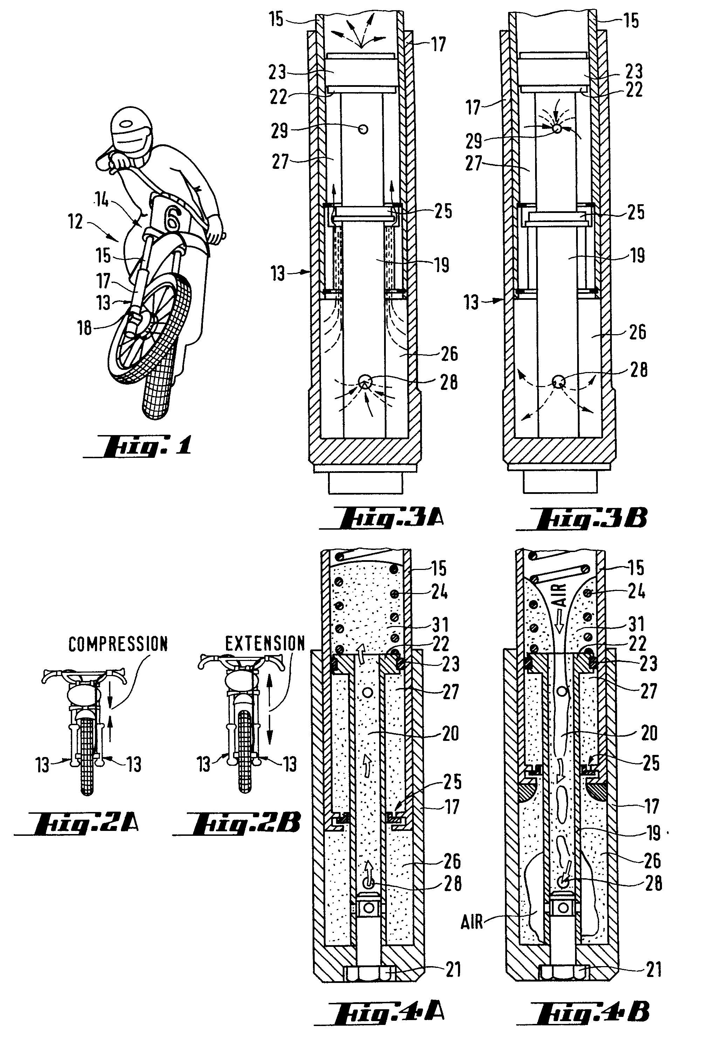

Referring now to the drawing, with particular reference to Figs. 1-4, there is illustrated the typical construction and operation of motorcycle front fork assemblies in accordance with the prior art. A front fork assembly 11 is provided on a motorcycle 12 and made up of a pair of front fork members 13, each secured to the steering stem 14 of the motorcycle at or adjacent to the top of the front fork member 13. Each front fork member is made up of an upper fork tube 15 closed by a cap 16 at the top thereof and a lower fork tube or fork leg 17 which is telescopically, sealably movable with respect to the upper fork tube. The lower fork tubes 17 are provided with axel bosses 18 on which the motorcycle front wheel is mounted.

Each front fork member 13 is provided with a hollow cylindrical damper rod 19 having an axial damper chamber 20 and secured such as by means of a bolt 21 at the lower closed end of the lower fork tube 17. A damper piston 22 is provided on the upper end of the damper rod 19 including a piston ring 23 engaging the inside surface of the upper fork tube which telescopically moves within the lower fork leg 17. An incompressible fluid 31, such as oil or hydraulic fluid, is contained within the front fork assembly for movement between various chambers for damping.

A main spring 24 is positioned between the top of the damper piston 22 and the cap which closes the upper end of the upper fork tube 15 to hold the front fork member 13 in extended position as shown in Fig. 2B and return it to extended position after compression as shown in Fig. 2A.

A one-way valve 25 is provided between the damper rod 19 and the inside surface of the upper fork tube 15 to allow fluid upon compression of the fork member to pass from a compression chamber 26 at the lower end of the member between the damper rod 19 and inside surface of the lower fork leg 17 into an expansion chamber 27 between the damper rod 19 and the inside surface of the upper fork tube 15. Typically, one or more compression holes or ports 28 are provided through the damper rod 19, permitting flow of fluid from the compression chamber 26 into the damper chamber 20 upon compression and from the damper chamber 20 into the compression chamber 26 on extension. A rebound orifice 29 is provided near the upper end of the damper rod 19 for permitting flow of rebound fluid from the expansion chamber 27 through the orifice 29 into the damper chamber 20 upon extension, as illustrated in Fig. 3B.

The use of the same compression hole 28 for flow under compression as shown in Fig. 3A and extension as shown in Fig. 3B results in the employment of a hole size that is not optimum for both operations. These holes should be small for good control during the compression stroke and large for a rapid return of fluid back into the compression chamber 26 during the rebound or extension stroke. Therefore, in standard design, performance is compromised by using the same holes for oil passage in both directions.

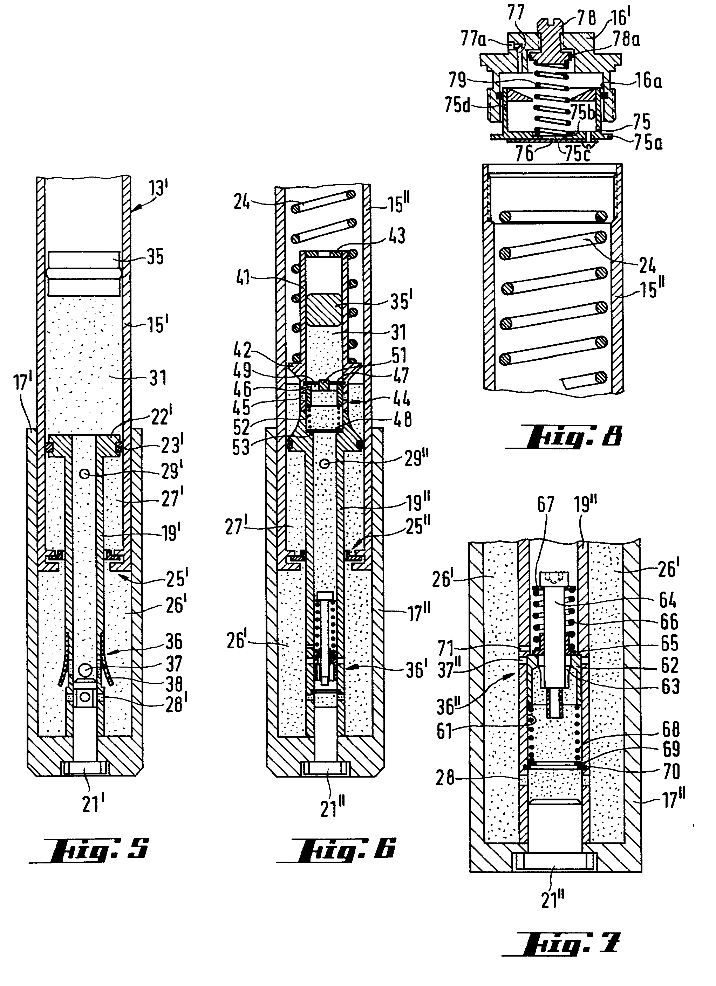

It has been discovered that damping of standard motorcycle front fork assemblies is not stable from stroke to stroke. Also, at higher speeds of compression, extension, compression, extension, etc., there was a deterioration of the damping quality. A lack of damping was noticed over part of the stroke, and as the speed of repetition increased, the lack of damping became more noticeable both in extension and in compression. Since applicant's discoveries in accordance with the present invention, applicant has come to suspect that as air is drawn into the system in the manner illustrated in Fig. 4B, the problems of air entrapment result.

## Description of Preferred Embodiments

Referring now to Fig. 5, there is illustrated one preferred embodiment of the present invention. As illustrated in Fig. 5, a float or floating piston 35 is positioned within the upper fork tube 15 for floating on the fluid 31 for preventing air from being pulled down the center of the damper rod 19' in the manner in which the air is shown flowing down the damper rod in Fig. 4B.

The front fork member 13' in Fig. 5 also includes a one-way valve 36 at the base of the damper rod 19' for providing one-way communication from the damper chamber 20 to the compression chamber 26 during the extension stroke of the fork member 13'. The valve 36 includes replenishment holes 37 in the damper rod 19' and reed valve elements 38 which close off the replenishment holes 37 during compression but open during the extension stroke.

Referring now to Figs. 6-8, there is shown an alternative embodiment of the present invention. As shown there, a float tube 41 is provided at the top of the damper rod A''. The float tube can be mounted on the damper rod 19'' by insertion in a cavity within the damper piston 22'' as illustrated in Fig. 9. The float tube 41 includes an outside spring seat shoulder 42 for engagement with the lower end of the main spring 24'' of the front fork member. An upper keeper clip 43 is provided in the upper end of the float tube 41 for capturing the float 35'' therebelow. A fluid regulation valve 44 is provided at the lower end of the float tube 41 for controlling oil replenishment and includes oil replenishment holes 45 in the float tube 41 and an inverted cup-shaped slider 46 captured within the float tube below a keeper clip 47 and above a keeper clip 48. The slider 46 is provided with apertures 49 in the top thereof permitting axial flow of fluid therethrough and an upwardly extending axial projection 51 engageable by the float 35" when the float approaches and reaches the bottom of its travel. Instead of the projection 51 on the slider 46, a projection could be provided on the bottom of the float to engage the slider 46. A spring 52 is captured between the slider 49 and an annular washer 53 held by the lower keeper 48 for spring-biasing the slider 49 in an upper position in which the walls of the slider 49 close off the oil replenishment holes 45.

With the float 35'' and the fluid regulation valve 44, fluid is captured in the damping system and in the float tube 41 below the float 35''. Extra fluid is stored outside the float tube 41 and can be used by the system on demand through the fluid regulation valve 44. With this construction, air in the fork tube member is separated from the fluid.

The base one-way valve 36'' in the embodiment of Figs. 6-9 of the invention is illustrated in Fig. 7. Referring to Fig. 7, the lower end of the damper rod 19'' includes a counterbore 61 for receiving a cup-shaped slide 62 provided with an axial passageway 63 through the cup for fluid passing from the compression holes 28 into and up through the damper rod 19'' during the compression stroke. Means are provided on the slide 62, such as a screw 64 for mounting an axial passageway closure such as a compression plate 65 for closing off the axial passageways 63 during the extension stroke. The compression plate 65 is slidably mounted on the screw 64 and biased in closed position by a spring 66 captured between the compression plate 65 and a washer 67 at the head of the screw 64. Spring 66 controls the pressure level at which the pressure plate 65 will open to allow passage of fluid on compression. A spring 68 is captured below the slide 62 by a washer 69 and keeper clip 70. The spring 68 controls the pressure level at which the slide 62 moves downward to open the replenishment holes 37'' on the extension stroke. At least one compression bleedhole 71 is provided in the damper rod above the base valve 36''.

On extension, the base valve 36'' slides as a unit down the center of the damper rod 19'' against the pressure of the positioning spring 68 under the force of the fluid flow to expose the replenishment holes 37'' with sufficient flow to optimize the replenishment. On the compression stroke, the slide 62 of the base valve 36'' returns to the top of the counterbore 61 and oil that is under high pressure flows through the compression bleedhole 71, and when the pressure reaches a sufficient level, the compression plate 65 is lifted from its seat, allowing fluid to flow through the axial passageways 63, around the compression plate 65 and up the center of the damper rod 19''. The size of the compression bleedhole 71 and the spring rate and pre-load of compression spring 66 determine the compression damping characteristics.

To eliminate pressure build-up in the front fork member 13'' a fork cap 16' is provided with a fork cap valve that is open when the fork is at full extension and closes under the force of the main spring 24 as the fork is compressed. With reference to Fig. 8, the cap valve in accordance with this embodiment of the present invention includes a cup-shaped valve member 75 which is provided with an outwardly extending flange 75a at the base of the cup 75 for engagement with the lower end of the cap 16' and with the main spring 24, an O ring 16a recessed in the cap 16' seals the outside surface of cup 75 and the cap 16'.

A spring seat recess 75b is centered around an aperture 75c in the bottom of valve member 75. A valve element such as a reed valve 76 is provided for the aperture 75c to allow passage of oil back into the fork tube 13''. An air port 75d is provided in the side wall of valve member 75 as a vent when the fork tube is at full extension.

A vent passageway 77 is provided through the top of the cap 16' and includes a filter member therein, such as a sintered bronze filter element 77a at the outer end of the passageway 77, to prevent passage of water and help build up pressure in the cap 16' sufficient to open the reed valve 76. A pre-load adjustment screw 78 passes through an aperture in the center of the cap 16' and is sealed with an O ring 78a. A pre-load spring 79 is positioned in the cap 16' between the screw 7b and the seat 75b in the valve element 75. Still air in the valve element 75 allows oil to drop out of the air flow in the cap valve for return to the fork tube. The pre-load spring 79 is used to overcome any pre-load of the main spring 24 and insures that the vent 75d is open at full extension of the fork.

Figure 9 illustrates the elements of the embodiment shown in Figs. 6-8 and how appropriate parts of the assembly of the embodiment shown in those drawings can be sold as a replacement kit to adapt prior art front fork assemblies to incorporate applicant's invention. As illustrated in Figure 9 the float tube 41' includes a plurality of grooves spaced along the length of the exterior surface thereof for receiving a spring seat retaining ring 56 which, when located in the groove, will prevent axial movement of a spring seat ring 57 which slides over the top of the float tube 41''' and serves as the lower support for the main spring 24.

A replacement kit can be sold including the damper tube 19''' containing its base valve 36'' and the float tube 41' with its float 35' and fluid regulation valve 44' along with the spring seat retaining ring 56 and spring seat ring 57. The replacement kit includes instructions for removal of the existing damper tube in a front fork assembly and replacement with the damper tube and float tube in the manner illustrated. The grooves on the outside surface of the float tube 41' permit the kit to be utilized in front fork assemblies of various different constructions by different manufacturers and also permit location of the spring seat retaining ring 56 at different positions to provide a different pre-load of the main spring to establish the firmness of the fork over small bumps.

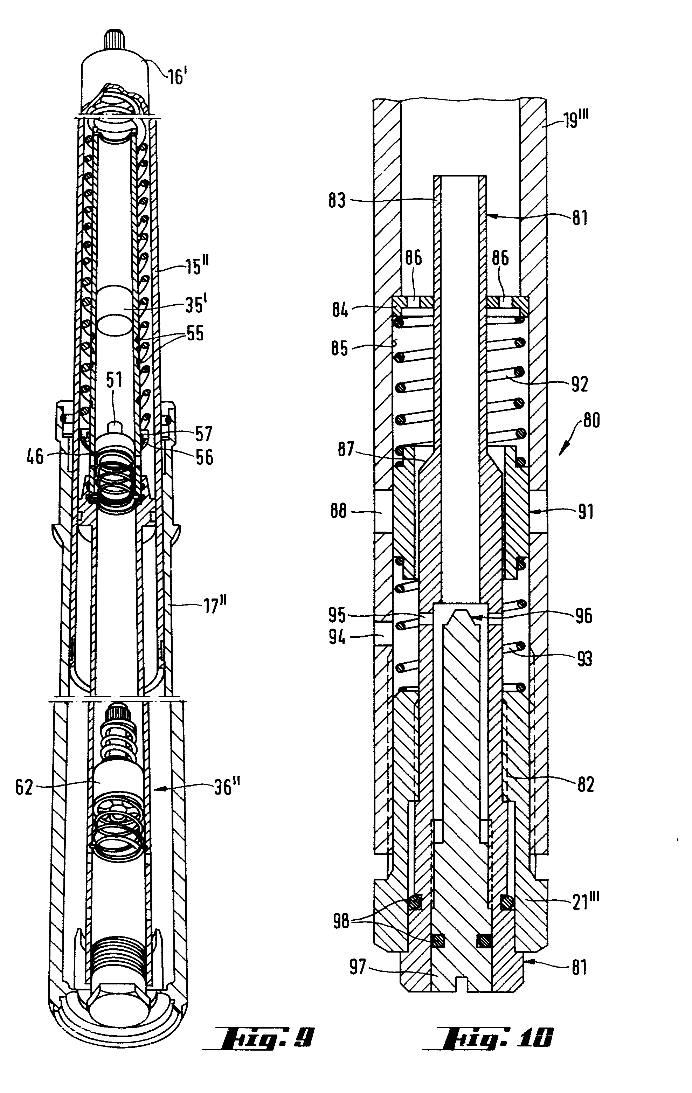

Another base valve assembly 80 and method is illustrated in Figure 10. As shown there a hollow cylindrical metering rod 81 is located within the lower end of the damper rod 19'''. The metering rod can be located for adjustment by being screw threaded such as at 82 through the bolt 21''''which secures the damper rod 19''' in the bottom of the fork leg (not shown). The front end 83 of the metering rod 81 is centered within the damper rod 19''' by passage through a washer 84 located at the upper end of a counterbore 85 in the damper rod 19''' and apertured at 86 for passage of fluid. The damper rod includes a tapered metering section 87 which reduces the outside diameter of the metering rod 81 in the direction upward of the metering rod 81.

The damper rod 19''' is provided with fluid replenishment apertures 88 adjacent the tapered metering section 87, and a sliding sleeve 91 is provided between the metering rod 81 and damper rod 19''' for closing off the apertures 88 but axially moved up or down to open passage through apertures 88. A first spring 92 for compression damping is positioned between the sliding sleeve 91 and the washer 84, and a second spring 93 between the sliding sleeve 91 and the front end of the bolt 10'''. A damper rod bleed port 94 is provided through the damper rod 19''' below the normal position for the slide 91 and adjacent a metering rod bleed port providing fluid passage through the metering rod 81. A needle valve is provided within the metering rod 81 at the upper end of a bleed screw 97 located at the lower end of the metering rod 81. The bleed screw 97, the metering rod 81 and the bolt 10''' are sealed by O-rings 98.

The sliding sleeve 81 moves under the force of compression or extension to expose the replenishment apertures 88. Upon compression, compression pressure through the bleed port 94 causes the slide to move upward against the force of compression spring 92. When the oil pressure rises significantly the sliding sleeve 91 exposes the metering section 87. The angle of the metering section 87 is selected to control high speed damping.

By turning the base of the metering rod 81 with respect to the bolt 10''' a mid-range speed adjustment is effected by altering the pressure needed to expose the metering section 87.

By turning the bleed screw 97, the needle valve 96 is adjusted to alter the low speed damping.

On extension of the front fork assembly fluid passing through the apertures 86 in washer 84 push the sliding sleeve 91 against the force of the extension damping spring 93 for allowing fluid passage out of the replenishment holes 88.

By changing the angle of the tapered metering section 87 high speed compression damping will change without affecting other characteristics. This change can be accomplished by removing the metering rod 81 and substituting a metering rod with a different angled taper.

-13-

Claims

1.   A motorcycle front fork assembly comprising, in combination,

an upper hollow cylindrical fork tube,

a lower hollow cylindrical fork leg closed at its lower end,

said fork tube and said fork leg telescopically, sealably movable with respect to one another and containing a substantially incompressible fluid,

a hollow damper rod connected at its lower end to the lower end of said fork leg, said damper rod having a piston at its upper end slidably engaging the interior surface of said fork tube, and

floating means positioned within said fork tube to float on the fluid within said fork tube for preventing air from entering said damper rod.

2.   The motorcycle front fork assembly of claim 1 wherein said floating means for providing air from the interior of said damper rod includes

a float tube positioned in said fork tube above said damper rod piston,

a float positioned within said float tube to float on the fluid within said float tube, and a fluid regulation valve permitting replenishment fluid flow into the interior of said float tube when said float reaches the bottom of its travel.

3.    The motorcycle front fork assembly of claim 2 wherein said fluid regulation valve includes

at least one fluid replenishment port in said float tube, and a slider means slidably positioned within said float tube for movement across and closure of said fluid replenishment port,

said slider means spring-biased for closure of said fluid replenishment port,

cooperative means between said slider means and said float for opening said replenishment port when said float reaches the bottom of its travel.

4.    The apparatus of claim 2 wherein said float tube includes

a plurality of grooves in the external surface thereof,

a spring seat retaining ring adapated to be positioned in one of said grooves, and

a spring seat slidable over said float tube for engagement with said spring seat retaining ring

whereby said spring seat retaining ring can be positioned in selected different grooves to accommodate said float tube to fork assemblies of different manufacture or to control the pre-load for the main spring.

5.    The apparatus of claim 1 including means for venting the interior of said fork assembly to atmosphere upon extension of the fork assembly.

-15-

6.    The apparatus of claim 1 including a compression chamber defined between said fork leg and said damper rod below the lower end of said fork tube; at least one compression port providing fluid communication between said compression chamber and the interior of said damping rod, valve means for providing one-way communication from the interior of said damper rod to said compression chamber during the extension stroke of said fork assembly.

7.    The motorcyle front fork assembly in accordance with claim 6 wherein said valve means for providing one-way communication from the interior of said damper rod to said compression chamber comprises at least one replenishment hole provided in said damper rod, a slide movable within the base of said damper rod between a spring-biased position closing off said replenishment hole and a position leaving said replenishment hole open, at least one fluid passageway in said slide permitting axial flow of fluid through said slide, a compression plate spring-biased to close off said axial passageway but permitting opening of said axial passageway under a predetermined fluid pressure from fluid flow from said compression chamber through said compression port.

-16-

8.    The motorcycle front fork assembly in accordance with claim 1 including

a compression chamber defined between said fork leg and said damper rod below the lower end of said fork tube,

valve means for providing fluid communication between said compression chamber and the interior of said damping rod, comprising

a metering rod positioned within the bottom of said damper rod,

at least one fluid passage through said damper rod,

a sliding. sleeve positioned beteen the interior surface of said damper rod and the exterior surface of said metering rod for closing off fluid flow through said fluid passage,

first spring bias means biasing said sliding sleeve upward, said first bias means yielding upon extension of said front fork assembly to allow said slide to move downward for flow of fluid from said damper rod into said compression chamber,

second spring bias means biasing said sliding sleeve downward,

said second bias means yielding upon compression of said front fork assembly to allow said slide to move upward for flow of fluid from said compression chamber into said damper rod, and

at least one fluid bleed port through said damper rod below the normal position for said sliding sleeve.

9. The apparatus of claim 8 including a tapered metering section on the outside surface of said metering rod exposed by travel of said sliding sleeve for controlling the damping of said front fork assembly, and means for adjusting the relative position between said sliding sleeve and said metering rod and said metering section.

10. The apparatus of claim 9 including at least one metering rod bleed port through said metering rod and means for controlling flow of fluid through said metering rod bleed port for adjusting the low speed damping of said front fork assembly.

11. A motorcycle front fork assembly comprising, in combination,

an upper hollow cylindrical fork tube,

a lower hollow cylindrical fork leg closed at its lower end,

said fork tube and said fork leg telescopically, sealably movable with respect to one another and containing a substantially incompressible fluid,

a hollow damper rod connected at its lower end to the lower end of said fork leg, said damper rod having a piston at its upper end slidably engaging the interior surface of said fork tube,

a compression chamber defined between said fork leg and said damper rod below the lower end of said fork tube,

at least one compression port providing fluid communication between said compression chamber and the interior of said damping rod,

valve means for providing one-way communication from the interior of said damper rod to said compression chamber during the extension stroke of said fork assembly.

0173020

12. The motorcyle front fork assembly in accordance with claim 11 wherein said valve means for providing one-way communication from the interior of said damper rod to said compression chamber comprises at least one replenishment hole provided in said damper rod,

a slide movable within the base of said damper rod between a spring-biased position closing off said replenishment hole and a position leaving said replenishment hole open,

at least one fluid passageway in said slide permitting axial flow of fluid through said slide,

a compression plate spring-biased to close off said axial passageway but permitting opening of said axial passageway under a predetermined fluid pressure from fluid flow from said compression chamber through said compression port.

13. A motorcycle front fork assembly comprising, in combination,

an upper hollow cylindrical fork tube,

a lower hollow cylindrical fork leg closed at its lower end,

said fork tube and said fork leg telescopically, sealably movable with respect to one another and containing a substantially incompressible fluid,

a hollow damper rod connected at its lower end to the lower end of said fork leg, said damper rod having a piston at its upper end slidably engaging the interior surface of said fork tube,

a compression chamber defined between said fork leg and said damper rod below the lower end of said fork tube;

valve means for providing fluid communication between said compression chamber and the interior of said damping rod,

a float tube positioned in said fork tube above said damper rod piston,

floating means positioned within said float tube to float on the fluid within said float tube for preventing air from entering said damper rod, and

a fluid regulation valve permitting replenishment fluid flow into the interior of said float tube when said floating means reaches the bottom of its travel.

-21-

14. The motorcycle front fork assembly of claim 13 wherein said fluid regulation valve includes
at least one fluid replenishment port in said float tube, and a slider means slidably positioned within said float tube for movement across and closure of said fluid replenishment port,
said slider means spring-biased for closure of said fluid replenishment port,
cooperative means between said slider means and said float for opening said replenishment port when said float reaches the bottom of its travel.

15. The apparatus of claim 13 wherein said float tube includes
a plurality of grooves in the external surface thereof,
a spring seat retaining ring adapted to be positioned in one of said grooves, and
a spring seat slidable over said float tube for engagement with said spring seat retaining ring,
whereby said spring seal retaining ring can be positioned in selected different grooves to accommodate said float tube to fork assemblies of different manufacture or to control the preload for the main spring.

16. The apparatus of claim 13 including means for venting the interior of said fork assembly to atmosphere upon extension of the fork assembly.

17. The motorcyle front fork assembly in accordance with claim 13 wherein said valve means for providing communication between said compression chamber and the interior of said damper rod comprises

at least one replenishment hole provided in said damper rod,

a slide movable within the base of said damper rod between a position closing off said replenishment hole and a position leaving said replenishment hole open,

at least one fluid passageway in said slide permitting axial flow of fluid through said slide,

a compression plate spring-biased to close off said axial passageway but permitting opening of said axial passageway under a predetermined fluid pressure from fluid flow from said compression chamber through said compression port.

18. The motorcycle front fork assembly in accordance with claim 13 wherein said valve means for providing fluid communication between said compression chamber and the interior of said damping rod, comprises

a metering rod positioned within the bottom of said damper rod,

at least one fluid passage through said damper rod,

a sliding sleeve positioned beteen the interior surface of said damper rod and the exterior surface of said metering rod for closing off fluid flow through said fluid passage,

first spring bias means biasing said sliding sleeve upward, said first bias means yielding upon extension of said front fork assembly to allow said slide to move downward for flow of fluid from said damper rod into said compression chamber,

second spring bias means biasing said sliding sleeve downward,

said second bias means yielding upon compression of said front fork assembly to allow said slide to move upward for flow of fluid from said compression chamber into said damper rod, and

at least one fluid bleed port through said damper rod below the normal position for said sliding sleeve.

19. The apparatus of claim 18 including

a tapered metering section on the outside surface of said metering rod exposed by travel of said sliding sleeve for controlling the damping of said front fork assembly, and

means for adjusting the relative position between said sliding sleeve and said metering rod and said metering section.

20. The apparatus of claim 19 including
at least one metering rod bleed port through said metering rod and
means for controlling flow of fluid through said metering rod bleed port for adjusting the low speed damping of said front fork assembly.

21. A damping replacement kit for motorcycle fork assemblies which include an upper hollow cylindrical fork tube and a lower hollow cylindrical fork leg closed at its lower end with said fork tube and said fork leg telescopically, sealably movable with respect to one another and containing a substantially incompressible fluid, comprising, in combination:
a hollow damper rod for connection at its lower end to the lower end of said fork leg,
said damper rod having a piston at its upper end slidably engaging the interior surface of said fork tube
a compression chamber is defined between said fork leg and said damper rod below the lower end of said fork tube;
valve means providing fluid communication between said compression chamber and the interior or said damping rod;
a float tube positioned in said fork tube above said damper rod piston,
floating means positioned within said fork tube to float on the fluid within said float tube for preventing air from entering said damper rod, and
a fluid regulation valve permitting replenishment fluid flow into the interior of said float tube when said floating means reaches the bottom of its travel.

-25-

22. The apparatus of claim 21 wherein said fluid regulation valve includes at least one fluid replenishment port in said float tube, and a slider means slidably positioned within said float tube for movement across and closure of said fluid replenishment port, said slider means spring-biased for closure of said fluid replenishment port, cooperative means between said slider means and said float for opening said replenishment port when said float reaches the bottom of its travel.

23. The apparatus of claim 21 wherein said float tube includes a plurality of grooves in the external surface thereof, a spring seat retaining ring adapated to be positioned in one of said grooves, and a spring seat slidable over said float tube for engagement with said spring seat retaining ring, whereby said spring seal retaining ring can be positioned in selected different grooves to accommodate said float tube to fork assemblies of different manufacture or to control the preload for the main spring.

24. The apparatus of claim 21 wherein said valve means for providing communication between said compression chamber and said damper rod comprises

at least one replenishment hole provided in said damper rod,

a slide movable within the base of said damper rod between a spring-biased position closing off said replenishment hole and a position leaving said replenishment hole open,

at least one fluid passageway in said slide permitting axial flow of fluid through said slide,

a compression plate spring-biased to close off said axial passageway but permitting opening of said axial passageway under a predetermined fluid pressure from fluid flow from said compression chamber through said compression port.

25. The apparatus of with claim 21 said valve means for providing fluid communication between said compression chamber and the interior of said damping rod, comprises

a metering rod positioned within the bottom of said damper rod,

at least one fluid passage through said damper rod,

a sliding sleeve positioned beteen the interior surface of said damper rod and the exterior surface of said metering rod for closing off fluid flow through said fluid passage,

first spring bias means biasing said sliding sleeve upward, said first bias means yielding upon extension of said front fork assembly to allow said slide to move downward for flow of fluid from said damper rod into said compression chamber,

second spring bias means biasing said sliding sleeve downward,

said second bias means yielding upon compression of said front fork assembly to allow said slide to move upward for flow of fluid from said compression chamber into said damper rod, and

at least one fluid bleed port through said damper rod below the normal position for said sliding sleeve.

26. The apparatus of claim 25 including

a tapered metering section on the outside surface of said metering rod exposed by travel of said sliding sleeve for controlling the damping of said front fork assembly, and

means for adjusting the relative position between said sliding sleeve and said metering rod and said metering section.

27. The apparatus of claim 26 including at least one metering rod bleed port through said metering rod and means for controlling flow of fluid through said metering rod bleed port for adjusting the low speed damping of said front fork assembly.

28. Method of controlling damping in a motorcycle front fork assembly containing spring extended front fork and front leg hollow cylinders containing an incompressible fluid and with a damper rod positioned within the fork leg below a mainspring comprising the step of floating a member on the fluid above the damper rod thereby preventing air from moving down internally of said damper rod.

29. The method in accordance with claim 28 including the step of regulating fluid flow between the interior of said damper rod and a compression chamber in the lower end of said fork leg outside said damper rod, said regulating step including sliding a valve member across a fluid replenishment opening between the interior of the damper rod and the compression chamber.

Fig. 1

Fig. 3A

Fig. 3B

COMPRESSION

EXTENSION

Fig. 2A

Fig. 2B

Fig. 4A

Fig. 4B

0173020

**Fig. 5**

**Fig. 6**

**Fig. 8**

**Fig. 7**

0173020

**Fig. 9**

**Fig. 10**